# EUROPEAN PATENT SPECIFICATION

(11) **EP 4 741 283 B1**
(45) Date of publication and mention of the grant of the patent: **28.10.2026**
(21) Application number: 25210370.0
(22) Date of filing: 22.10.2025
(51) Int. Cl.: B64C 9/04, B64C 9/22, B64C 13/38

(54) **ACTUATION MECHANISM FOR A HIGH LIFT SYSTEM, ASSOCIATED HIGH LIFT SYSTEM, AIRCRAFT AND METHOD OF ACTUATING A HIGH LIFT SYSTEM**
BETÄTIGUNGSMECHANISMUS FÜR EIN HOCHAUFTRIEBSSYSTEM, ZUGEHÖRIGES HOCHAUFTRIEBSSYSTEM, FLUGZEUG UND VERFAHREN ZUM BETÄTIGEN EINES HOCHAUFTRIEBSSYSTEMS
MÉCANISME D'ACTIONNEMENT POUR UN SYSTÈME HYPERSUSTENTATEUR, SYSTÈME HYPERSUSTENTATEUR ASSOCIÉ, AÉRONEF ET PROCÉDÉ D'ACTIONNEMENT D'UN SYSTÈME HYPERSUSTENTATEUR

(30) Priority: 12.11.2024 DE 102024132959
(43) Date of publication of application: 13.05.2026
(73) Proprietor: Airbus Operations GmbH, 21129 Hamburg (DE)
(72) Inventor: Schlipf, Bernhard, 21129 Hamburg (DE); Gibbert, Markus, 21129 Hamburg (DE)
(74) Representative: Airbus Germany

(56) References cited:
- EP-A1- 1 338 506
- US-A- 4 427 168
- US-A1- 2004 046 087
- US-B2- 9 016 637

## Description

The present disclosure relates to an actuation mechanism for a high lift system. The disclosure also relates to a high lift system comprising such an actuation mechanism. The disclosure further relates to an aircraft comprising such a high lift system and to a method of actuating such a high lift system.

In the domain of actuation mechanisms for high lift systems, and for example for Krüger flaps, one knows using rotational actuators, such as geared rotary actuators (often abbreviated GRA), to deploy and retract the high lift surfaces. The rotational actuator of such known mechanism is generally fastened to a wing body and moves linkages, connected to the high lift surface, in order to move the high lift surface relative to the wing body.

In order to limit the spatial footprint of such actuation mechanisms in the wing body, one knows for example using linkage elements having a shape adapted to receive the rotational actuator when the high lift surface is retracted. Such linkages are often referred to as "swan neck" or "goose neck", because of their specific shape.

Such mechanisms are however not entirely satisfying. Indeed, such mechanism require the rotational actuator to be arranged near the leading edge of the wing body. In high performance wings, such as laminar wings, the thickness of the wing near the leading edge is limited such as integration of known mechanisms is especially challenging.

EP 1 338 506 A1 discloses an airplane wing with leading edge devices, said leading edge devices comprising one or more slats and at least one Krueger flap per side, which are driven by a common power drive unit through a common shaft system between a normal flight position, a take-off position and a landing position. The incompatibility of the flap sequence between slat and Krueger is overcome by using an over center drive arrangement in the Krueger actuation. US 4 427 168 A discloses an actuating mechanism for variable camber leading edges of aerodynamic airfoils. US 2004/046087 A1 discloses methods and apparatuses for controlling airflow with a leading edge device having a flexible flow surface.

An object of the present invention is therefore to provide an actuation mechanism for a high lift system for which the integration in a high-performance wing is improved.

To this end, the invention relates to an actuation mechanism for a high lift system, configured for moving a high lift surface relative to a wing body, the actuation mechanism comprising:
- a guiding linkage, configured to be connected to the high lift surface and for guiding a displacement of the high lift surface relative to the wing body,
- a rocker, configured to be connected to the wing body and to be moveable in rotation relative to the wing body;
- a rotational actuator, comprising a housing and an actuation element, the housing being fastened to the rocker and the actuation element being moveable in rotation relative to the housing; and
- an actuation linkage, connected to the actuation element and configured to be connected to the high lift surface and to the wing body, the actuation linkage being configured for displacing the rocker and the high lift surface relative to the wing body upon rotation of the actuation element relatively to the housing.

The use of an actuation mechanism comprising rotational actuator mounted on a rocker as presented above is especially relevant since this allows the actuator to be distanced to the leading edge of the wing body while ensuring a proper actuation of the high lift surface.

According to other advantageous aspects of the invention, the actuation mechanism comprises one or more of the following features taken alone or according to all technically possible combinations:
- the guiding linkage is configured to be connected to the wing body and for guiding the displacement of the high lift surface in rotation relative to the wing body;
- the guiding linkage is connected to the rocker and configured for guiding the displacement of the high lift surface in rotation relative to the rocker;
- the guiding linkage is configured to be fastened to the high lift surface, the guiding linkage extending substantially along a L shape;
- the actuation linkage comprises a proximal link element, an actuation link element and a distal link element,
   the actuation link element being fastened to the actuation element,
   the proximal link element being connected to the actuation link element and being moveable in rotation relative to the actuation link element, the proximal link element being further configured for being connected to the wing body and for being moveable in rotation relative to the wing body,
   the distal link element being connected to the actuation link element and being moveable in rotation relative to the actuation link element, the distal link element being further configured for being connected to the high lift surface and for being moveable in rotation relative to the high lift surface;
- the actuation link element comprises two non-aligned actuation arms;
- an angle between the two non-aligned actuation arms is comprised between 5° and 30°;
- the proximal link element is shorter than the distal link element; and
- the rocker comprises a main body and a connection section, the housing of the rotational actuator being fastened to the main body and the connection section being configured to be connected to the wing body for the rocker to be moveable in rotation relative to the wing body.

The invention further relates to a high lift system comprising a wing body, a high lift surface and an actuation mechanism as presented above, the guiding linkage of the actuation mechanism being connected to the high lift surface, the rocker of the actuation mechanism being connected to the wing body and the actuation linkage of the actuation mechanism being connected to the high lift surface and to the wing body.

According to an advantageous aspect of the invention, the high lift surface is forming a Krüger flap.

The invention further relates to an aircraft comprising a high lift system as presented above.

The invention further relates to a method of actuating a high lift system as presented above, wherein the method comprises:
- actuation of the rotational actuator to move the actuation element relatively to the housing of the rotational actuator;
- displacement of the high lift surface relative to the wing body by the actuation linkage;
- guiding of the displacement of the high lift surface relative to the wing body by the guiding linkage; and
- rotation of the rocker relative to the wing body.

According to other advantageous aspects of the invention, the method of actuating a high lift system comprises one or more of the following features taken alone or according to all technically possible combinations:
- the high lift system is actuated between a retracted position and a deployed position, the actuation between the retracted and the deployed position comprising:
   - a first phase, in which the rocker rotates in a first direction relative to the wing body, and
   - a second phase, in which the rocker rotates in a second direction relative to the wing body, the second direction being opposed to the first direction; and
- the rocker is arranged in an inner volume defined by the wing body when the high lift system is in its retracted position and in its deployed position.

The invention will be better understood when reading the following description, which is given solely by way of example and with reference to the appended drawings, in which:
- Figure 1 is a schematic view of an aircraft comprising a high lift system with an actuation mechanism according to the invention;
- Figure 2 is a schematic view of the high lift system of figure 1, wherein the high lift system is in a retracted position;
- Figure 3 is a schematic view similar to the view of figure 2, wherein the high lift system is in a first intermediate position, between its retracted and deployed positions;
- Figure 4 is a schematic view similar to the view of figures 2 and 3, wherein the high lift system is in a second intermediate position, between its retracted and deployed positions;
- Figure 5 is a schematic view similar to the view of figures 2 to 4, wherein the high lift system is in a deployed position; and
- Figure 6 is a schematic view similar to the view of figure 3, of another example of high lift system.

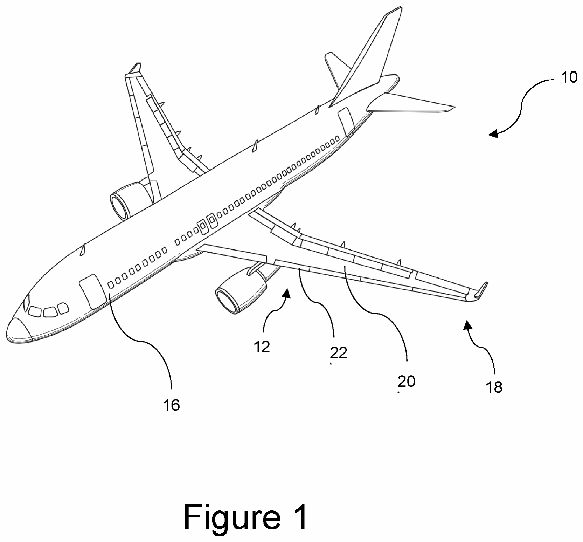

As illustrated in figure 1, an aircraft 10 comprises a high lift system 12.

The aircraft 10 is for example an airplane and for example an airliner. As visible from figure 1, the aircraft 10 comprises a fuselage 16 and wings 18.

For example, and as illustrated on figure 1, each wing 18 of the aircraft 10 comprises at least one high lift system 12.

The high lift system 12 comprises a wing body 20, a high lift surface 22 and an actuation mechanism 24 for the high lift system 12. In an example, the high lift system 12 comprises a plurality of actuation mechanisms 24, as this will be presented hereinafter.

The wing body 20 is for example a portion of the wing 12 being fixed relative to the fuselage 16, such as for example a wingbox of the wing 12.

The high lift surface 22 is moveable relative to the wing body 20 and is in particular moveable relative to the wing body 20 through the actuation mechanism 24.

The high lift surface 22 is in particular moveable between a retracted position and a deployed position, corresponding to retracted and deployed positions of the high lift system 12.

In the retracted position, the high lift surface 22 is retracted, or in other word stowed, relative to the wing body 20.

The high lift surface 22 is for example configured to adopt its retracted position when the aircraft 10 is in a cruise configuration.

In the deployed position, the high lift surface 22 is deployed relative to the wing body 20, for example such that the high lift surface 22 is further away from the wing body 20 when it is in its deployed position than when it is in its retracted position. The high lift surface is for example configured to increase a camber and/or a surface of the wing 18 when it is in its deployed position.

The high lift surface 22 is for example configured to adopt its deployed position when the aircraft is in a take-off or landing configuration.

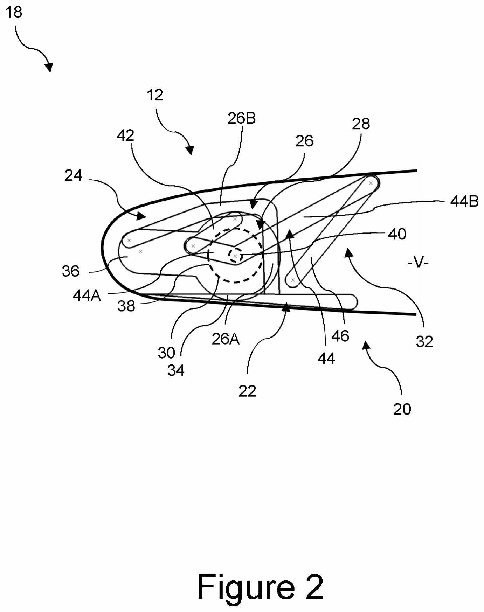

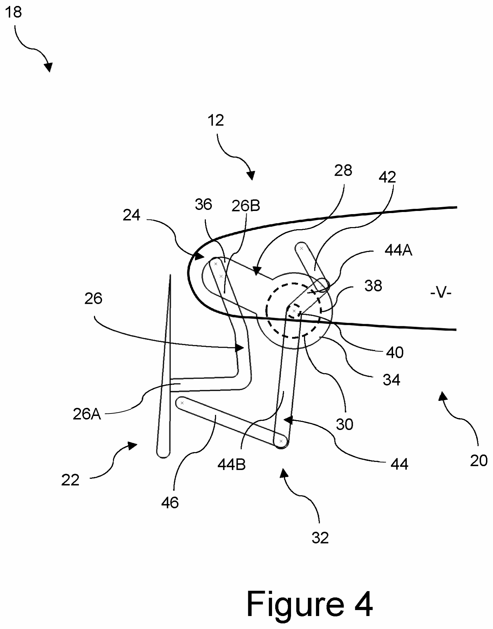

As visible from figure 2 to 5 and 6, the high lift surface 22 is for example forming a Krüger flap. In other word, and in such an example, the high lift surface 22 is for example forming the flap of such a Krüger flap and the actuation mechanism 24 is forming a Krüger flap actuation system.

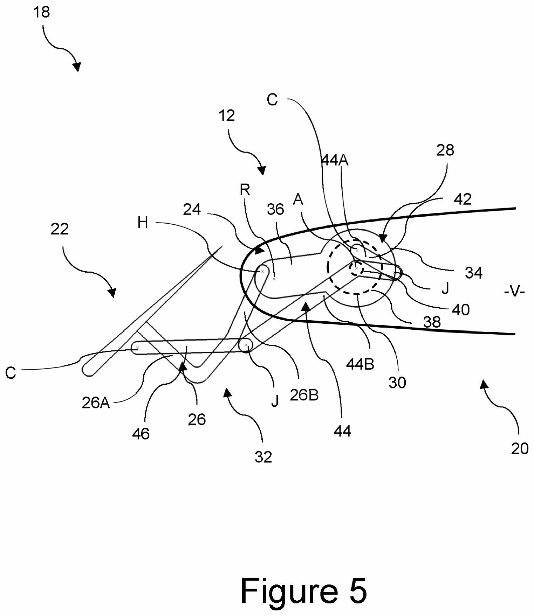

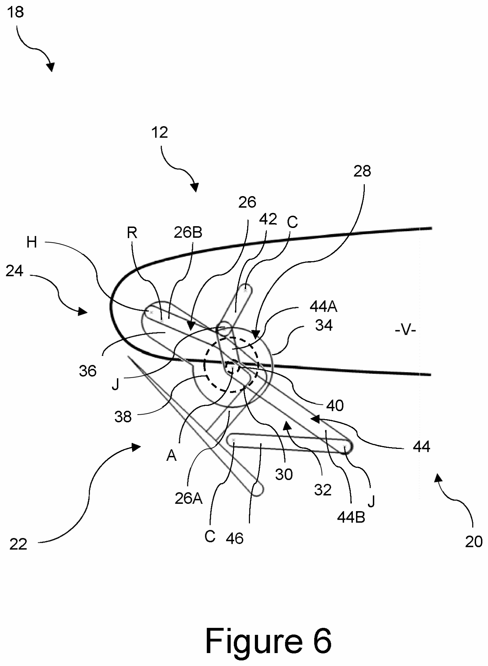

One understands that a Krüger flap is for example a leading edge high lift system 12 for which the high lift surface 22 is rotatable around a hingeline H (presented in more details later and only referenced in figures 5 and 6 for readability purposes), preferably arranged near a leading edge of the wing body 20, such that a lower face of high lift surface 22 when the high lift surface is in its retracted position corresponds to a upper face once the high lift surface 22 is in its deployed position.

The actuation mechanism 24 is configured for moving the high lift surface 22 relative to the wing body 20, for example between the deployed position of the high lift surface 22 and the retracted position of the high lift surface 22.

The actuation mechanism 24 comprises a guiding linkage 26, a rocker 28, a rotational actuator 30 and an actuation linkage 32.

The guiding linkage 26, is configured to be connected to the high lift surface 22 and for guiding a displacement of the high lift surface 22 relative to the wing body 20. The guiding linkage 26 is in particular connected to the high lift surface 22 such that it guides the displacement of the high lift surface 22 between its deployed and retracted positions relative to the wing body 20.

As visible on figures 2 to 5 and 6, the guiding linkage 26 is for example fastened to the high lift surface 22.

The guiding linkage 26 is further for example configured to be connected to the wing body 20.

In the example of figures 2 to 5, the guiding linkage 26 is directly connected to the wing body 20. For example, the guiding linkage 26 is rotatably mounted on the wing body 20 such that the high lift surface 22, for example fastened on the guiding linkage 26, is rotatable relative to the wing body 20. The guiding linkage 26 is for example configured for guiding the high lift surface 22 in rotation relative to the wing body 20. For example, the guiding linkage 26 is configured for guiding the high lift surface 22 in rotation around a hingeline H, the hingeline H being for example fixed relative to the wing body 20.

As understood from figures 2 to 5, the hingeline H extends for example along a spanwise direction of the wing body 20, for example at, or near, a leading edge (non-referenced) of the wing body 20.

As this will be presented in more details later on, and as presented in the example of figure 6, the guiding linkage 26 is indirectly connected to the wing body 20. In particular, in this example, the guiding linkage 26 is connected to the wing body through the rocker 28.

In the example of figures 2 to 6, the guiding linkage 26 extends substantially along a L shape. In particular, the guiding linkage 26 comprises a first portion 26A and a second portion 26B, the first 26A and section 26B portions being for example substantially perpendicular one relative to another.

In the example of figure 2 to 5, the first portion 26A is fastened to the high lift surface 22 and the second portion 26B is moveable in rotation relative to the wing body 20 around the hinge line H.

As visible from figures 2 to 6, although extending substantially along a L shape, at least one of the first 26A and second 26B portion of the guiding linkage 26 might be curved at least in one region (not referenced), such that said portion is not linear.

The rocker 28 is configured to be connected on the wing body 20 and to be moveable in rotation relative to the wing body 20.

As visible from figures 2 to 5 and 6, the rocker is for example connected to the wing body 20 and moveable in rotation around a rocker axis R (only referenced in figures 5 and 6 for readability purposes), relative to the wing body 20. The rocker axis R is for example substantially parallel to the hinge line H.

As presented in figures 2 to 5 and 6, the rocker 28 comprises for example a main body 34 and a connection section 36. In such an example, the connection section 36 connects for example the main body 34 to the wing body 20 such that the main body 34 of the rocker 28 is moveable in rotation relative to the wing body 20, for example around the rocker axis R defined for example by the connection section 36.

As this will be presented in more details later, the rotational actuator 30 is for example connected to the rocker 28 and moveable with the rocker 28 around the rocker axis R.

The rotational actuator 30 comprises for example a housing 38 and an actuation element 40.

The rotational actuator 30 is for example connected to a control module (non-illustrated), the control module being for example configured to control the rotational actuator 30. The control module is for example configured to control deployment/retraction of the high lift surface 22 by controlling the rotational actuator 30, or in other words, relative displacement between the housing 38 and the actuation element 40.

The actuation element 40 is for example moveable in rotation relative to the housing 38, for example around an actuation axis A (only referenced in figures 5 and 6 for readability purposes). The actuation axis is for example substantially parallel to the hinge line H and/or to the rocker axis R.

As visible from figures 2 to 5 and 6, the housing 38 is for example fastened to the rocker 28, and for example to the main body 34 of the rocker 28. In a non-illustrated example the housing 38 and the rocker 28 are integral.

The actuation element 40 is then for example moveable in rotation around the actuation axis A relative to the housing 38 such that it moveable in rotation around the rotation axis A relative to the rocker 28.

As visible from figures 2 to 5 and 6, the actuation linkage 32 is connected to the actuation element 40, in particular such that the rotational actuator 30 is configured for moving the actuation linkage 32 relative to the rocker 28.

For example, the actuation linkage 32 is fastened to the actuation element 40.

As visible from figures 2 to 5 and 6, the actuation linkage 32 is further configured to be connected to the high lift surface 22 and to the wing body 20. In particular, and for example, the actuation linkage is connected to the high lift surface 22 an to the wing body 20 to be locally moveable in rotation around the high lift surface 22 and to the wing body 20

As understood from figures 2 to 5, the actuation linkage 32 is configured for displacing the rocker 28 and the high lift surface relative to the wing body 20 upon rotation of the actuation element 40 relatively to the housing 38.

The actuation linkage 32 comprises for example a proximal link element 42, an actuation link element 44 and a distal link element 46.

The actuation link element 44 is for example fastened to the actuation element 40. In a non-illustrated example, the actuation link element 44 and the actuation element 40 are integral.

The actuation link element 44 is for example connected to the proximal link element 42 and to the distal link element 46. For example, the proximal link element 42 is moveable in rotation relative to the actuation link element 44 and the distal link element 46 is moveable in rotation relative to the actuation element 44.

For example, the proximal link element 42, the actuation link element 44 and the distal link element 46 are articulated so that they can be moved one relative to another around junction axes J (only referenced in figures 5 and 6 for readability purposes) being substantially parallel to the actuation axis A.

In the example of figures 2 to 5 and 6, the actuation link element 44 comprises two non-aligned actuation arms 44A, 44B. The non-aligned actuation arms 44A, 44B are fixed one relative to another and are for example integral.

For example, a first 44A of the actuation arms 44A, 44B is connected, for example articulated, to the proximal link element 42 and a second 44B of the actuation arms 44A, 44B is connected, for example articulated, to the distal link element 46.

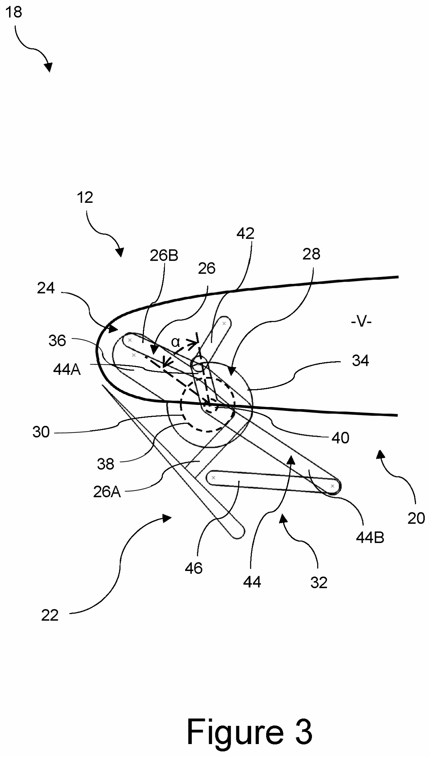

An angle α (only referenced on figure 3 for readability purposes) between the two non-aligned actuation arms 44A, 44B is for example comprised between 5° and 30°.

A length L1 of the first actuation arm is 44A is for example shorter than a length L2 of the second actuation arm 44B (L1 and L2 being non-referenced in the drawings for readability purposes). A ratio of the length L1 of the first actuation arm is 44A over the length L2 of the second actuation arm 44B is for example comprised between 20 and 50%.

As presented above, the proximal link element 42 is connected to the actuation link element 44 and is for example moveable in rotation relative to the actuation link element 44. Furthermore, as visible from figures 2 to 5 and 6, the proximal link element 42 is further for example connected to the wing body 20 and is moveable in rotation relative to the wing body 20.

As presented above, the distal link element 46 is connected to the actuation link element 44 and is for example moveable in rotation relative to the actuation link element 44. Furthermore, as visible from figures 2 to 5 and 6, the distal link element 46 is further for example connected to the high lift surface 22 and is moveable in rotation relative to high lift surface 22.

As visible from figures 2 to 5 and 6, the distal link element 46 and the high lift surface 22, as well as the proximal link element 42 and the wing body 20, are articulated around connection axes C (only referenced in figures 5 and 6 for readability purposes), the connection axes being for example substantially parallel to the actuation axis A.

The proximal link element 42 is for example shorter than the distal link element 46.

A ratio of a length LP of the proximal link element 42 over the length L1 of the first actuation arm is for example comprised between 90% and 120% (LP being non-referenced in the drawings for readability purposes).

A ratio of a length LD of the distal link element 46 over the length L2 of the second actuation arm is for example comprised between 60 % and 110% (LD being non-referenced in the drawings for readability purposes.

A ratio of the length LP of the proximal link element 42 over the length LD of the distal link element 46 is for example comprised between 20% and 60%.

The example presented in figure 6 will now be presented in more details. This example differs from the example presented in figures 2 to 5 only by the following elements.

As previously mentioned, and in this example the guiding linkage 26 is not directly connected to the wing body 20 but is instead connected to the rocker 28. In particular, the guiding linkage 26 is then configured for guiding the displacement of the high lift surface 22 in rotation relative to the rocker 28.

The hinge line H is then, in such an example, configured for moving along with the rocker 28.

A method of actuating a high lift system 12 comprising an actuation mechanism 24 as above described will now be presented.

The method comprises the actuation of the rotational actuator 30 to move the actuation element 40 relatively to the housing 38 of the rotational actuator 30.

The method further comprises the displacement of the high lift surface 22 relative to the wing body 20 by the actuation linkage 32. In particular, the displacement of the high lift surface 22 relative to the wing body 20 by the actuation linkage 32 results from the displacement actuation linkage 32 resulting for the actuation of the rotational actuator and from the interaction of such displaced actuation linkage with the high lift surface 22 and with the wing body 20.

The method further comprises the guiding of the high lift surface 22 relative to the wing body by the guiding linkage 26. The high lift is for example guided by the guiding linkage 26 in its displacement induced by the actuation linkage 32.

The method further comprises the rotation of the rocker 28 relative to the wing body 20. The rotation of the rocker 28 relative to the wing body 20 results for example of the actuation of the rotational actuator 30 and of the interaction between the guiding linkage 26 and the wing body 20.

One then understands that the above mentioned actuation, displacement, guiding and rotation are for example happening simultaneously, and that this results for example in the actuation of the high lift system 12 between its retracted and deployed positions.

Furthermore, and for example, the actuation of the high lift system 12 between its retracted and deployed positions comprises a first phase, in which the rocker 28 rotates in a first direction (non-represented) relative to the wing body 20 and a second phase, in which the rocker 28 rotates in a second direction (non-represented) relative to the wing body 20, the second direction being opposed to the first direction.

Furthermore, and as presented in figures 2 and 5, the rocker is arranged in an inner V volume defined by the wing body 20 when the high lift system 12 is in its retracted position (illustrated in figure 2) and in its deployed position (illustrated in figure 5). In other words, the rocker 28 may rotate out of the inner volume V during the deployment/retraction of the high lift system 12, but in this example, remains in the inner volume once the high lift system reaches its retracted or deployed position.

As presented above, the use of an actuation mechanism 24 the use of a rocker 28 as presented above to support the rotational actuator 30 is especially relevant to improve the positioning of the rotational actuator 30 in the wing body 20 while ensuring a proper actuation of the high lift surface 22.

The connection of the guiding linkage 26 to the wing body 20 or to the rocker 28 allows for a further improved positioning and/or load transmission for the actuation mechanism.

The use of L shaped guiding linkage 26 and/or of an actuation linkage 32 comprising a proximal 42, an actuation 44 and a distal 46 link elements is especially advantageous for its limited tridimensional footprint.

The previously presented geometry of the actuation linkage 32 is also especially relevant to ensure a proper load distribution in the high lift system 12 and in turns a proper actuation of the high lift system 12.

The rocker 28 comprising a main body 34 and a connection section 36 as presented above is also especially advantageous for improving the integration of the actuation mechanism 24 in the wing body 20.

### REFERENCE SIGNS

- 10: aircraft
- 12: high lift system
- 16: fuselage
- 18: wing
- 20: wing body
- 22: high lift surface
- 24: actuation mechanism
- 26: guiding linkage
- 26A: first portion of the guiding linkage
- 26B: second portion of the guiding linkage
- 28: rocker
- 30: rotational actuator
- 32: actuation linkage
- 34: main body
- 36: connection section
- 38: housing
- 40: actuation element
- 42: proximal link element
- 44: actuation link element
- 44A: first actuation arm
- 44B: second actuation arm
- 46: distal link element
- C: connection axis
- H: hinge line
- R: rocker axis
- A: actuation axis
- J: junction axis
- α: angle between first and second actuation arms
- L1: length of the first actuation arm
- L2: length of the second actuation arm
- LP: length of the proximal link element
- LD: length of the distal link element
- V: inner volume

## Claims

1. Actuation mechanism (24) for a high lift system (12), configured for moving a high lift surface (22) relative to a wing body (20), the actuation mechanism (24) comprising:
- a guiding linkage (26), configured to be connected to the high lift surface (22) and for guiding a displacement of the high lift surface (22) relative to the wing body (20),
- a rocker (28), configured to be connected to the wing body (20) and to be moveable in rotation relative to the wing body (20);
- a rotational actuator (30), comprising a housing (38) and an actuation element (40), the housing (38) being fastened to the rocker (28) and the actuation element (40) being moveable in rotation relative to the housing (38); and
- an actuation linkage (32), connected to the actuation element (40) and configured to be connected to the high lift surface (22) and to the wing body (20), the actuation linkage (32) being configured for displacing the rocker (28) and the high lift surface (22) relative to the wing body (20) upon rotation of the actuation element (40) relatively to the housing (38).

2. Actuation mechanism (24) according to claim 1, wherein the guiding linkage (26) is configured to be connected to the wing body (20) and for guiding the displacement of the high lift surface (22) in rotation relative to the wing body (20).

3. Actuation mechanism (24) according to claim 1, wherein the guiding linkage (26) is connected to the rocker (28) and configured for guiding the displacement of the high lift surface (22) in rotation relative to the rocker (28).

4. Actuation mechanism (24) according to any of the preceding claims, wherein the guiding linkage (26) is configured to be fastened to the high lift surface (22), the guiding linkage (26) extending substantially along a L shape.

5. Actuation mechanism (24) according to any of the preceding claims, wherein the actuation linkage (32) comprises a proximal link element (42), an actuation link element (44) and a distal link element (46),
the actuation link element (44) being fastened to the actuation element (40),
the proximal link element (42) being connected to the actuation link element (44) and being moveable in rotation relative to the actuation link element (44), the proximal link element (42) being further configured for being connected to the wing body (20) and for being moveable in rotation relative to the wing body (20),
the distal link element (46) being connected to the actuation link element (44) and being moveable in rotation relative to the actuation link element (44), the distal link element (46) being further configured for being connected to the high lift surface (22) and for being moveable in rotation relative to the high lift surface (22).

6. Actuation mechanism (24) according to claim 5, wherein the actuation link element (44) comprises two non-aligned actuation arms (44A, 44B).

7. Actuation mechanism (24) according to claim 6, wherein an angle (α) between the two non-aligned actuation arms (44A, 44B) is comprised between 5° and 30°.

8. Actuation mechanism (24) according to any of the claims 5 to 7, wherein the proximal link element (42) is shorter than the distal link element (46).

9. Actuation mechanism (24) according to any of the preceding claims, wherein the rocker (28) comprises a main body (34) and a connection section (36), the housing (38) of the rotational actuator (30) being fastened to the main body (34) and the connection section (36) being configured to be connected to the wing body (20) for the rocker (28) to be moveable in rotation relative to the wing body (20).

10. High lift system (12) comprising a wing body (20), a high lift surface (22) and an actuation mechanism (24) according to any of the claims 1 to 9, the guiding linkage (26) of the actuation mechanism (24) being connected to the high lift surface (22), the rocker (28) of the actuation mechanism (24) being connected to the wing body (20) and the actuation linkage (32) of the actuation mechanism (24) being connected to the high lift surface (22) and to the wing body (20).

11. High lift system (12) according to claim 10, wherein the high lift surface (22) is forming a Krüger flap.

12. Aircraft (10) comprising a high lift system (12) according to claim 10 or 11.

13. Method of actuating a high lift system (12) according to claim 10 or 11, wherein the method comprises:
- actuation of the rotational actuator (30) to move the actuation element (40) relatively to the housing (38) of the rotational actuator (30);
- displacement of the high lift surface (22) relative to the wing body (20) by the actuation linkage (32);
- guiding of the displacement of the high lift surface (22) relative to the wing body (20) by the guiding linkage (26); and
- rotation of the rocker (28) relative to the wing body (20).

14. Method of actuating a high lift system (12) according to claim 13, wherein the high lift system (12) is actuated between a retracted position and a deployed position, the actuation between the retracted and the deployed position comprising:
- a first phase, in which the rocker (28) rotates in a first direction relative to the wing body (20), and
- a second phase, in which the rocker (28) rotates in a second direction relative to the wing body (20), the second direction being opposed to the first direction.

15. Method of actuating a high lift system (12) according to claim 14, wherein the rocker (28) is arranged in an inner volume (V) defined by the wing body (20) when the high lift system (12) is in its retracted position and in its deployed position.

## Patentansprüche

1. Betätigungsmechanismus (24) für ein Hochauftriebssystem (12), der dafür konfiguriert ist, eine Hochauftriebsfläche (22) relativ zu einem Flügelkörper (20) zu bewegen, wobei der Betätigungsmechanismus (24) Folgendes umfasst:
- ein Führungsgestänge (26), das dafür konfiguriert ist, mit der Hochauftriebsfläche (22) verbunden zu werden, und zum Führen einer Verschiebung der Hochauftriebsfläche (22) relativ zum Flügelkörper (20),
- eine Schwinge (28), die dafür konfiguriert ist, mit dem Flügelkörper (20) verbunden zu werden und relativ zum Flügelkörper (20) drehbar beweglich zu sein;
- einen Drehaktuator (30), der ein Gehäuse (38) und ein Betätigungselement (40) umfasst, wobei das Gehäuse (38) an der Schwinge (28) befestigt ist und das Betätigungselement (40) relativ zum Gehäuse (38) drehbar beweglich ist; und
- ein Betätigungsgestänge (32), das mit dem Betätigungselement (40) verbunden ist und dafür konfiguriert ist, mit der Hochauftriebsfläche (22) und mit dem Flügelkörper (20) verbunden zu werden, wobei das Betätigungsgestänge (32) dafür konfiguriert ist, bei Drehung des Betätigungselements (40) relativ zum Gehäuse (38) die Schwinge (28) und die Hochauftriebsfläche (22) relativ zum Flügelkörper (20) zu verschieben.

2. Betätigungsmechanismus (24) nach Anspruch 1, wobei das Führungsgestänge (26) dafür konfiguriert ist, mit dem Flügelkörper (20) verbunden zu werden, und zum Führen der Verschiebung der Hochauftriebsfläche (22) in Drehung relativ zum Flügelkörper (20).

3. Betätigungsmechanismus (24) nach Anspruch 1, wobei das Führungsgestänge (26) mit der Schwinge (28) verbunden und dafür konfiguriert ist, die Verschiebung der Hochauftriebsfläche (22) in Drehung relativ zur Schwinge (28) zu führen.

4. Betätigungsmechanismus (24) nach einem der vorhergehenden Ansprüche, wobei das Führungsgestänge (26) dafür konfiguriert ist, an der Hochauftriebsfläche (22) befestigt zu werden, wobei sich das Führungsgestänge (26) im Wesentlichen entlang einer L-Form erstreckt.

5. Betätigungsmechanismus (24) nach einem der vorhergehenden Ansprüche, wobei das Betätigungsgestänge (32) ein proximales Verbindungselement (42), ein Betätigungsverbindungselement (44) und ein distales Verbindungselement (46) umfasst, wobei das Betätigungsverbindungselement (44) am Betätigungselement (40) befestigt ist,
wobei das proximale Verbindungselement (42) mit dem Betätigungsverbindungselement (44) verbunden ist und relativ zum Betätigungsverbindungselement (44) drehbar beweglich ist, wobei das proximale Verbindungselement (42) ferner dafür konfiguriert ist, mit dem Flügelkörper (20) verbunden zu werden und relativ zum Flügelkörper (20) drehbar beweglich zu sein,
wobei das distale Verbindungselement (46) mit dem Betätigungsverbindungselement (44) verbunden ist und relativ zum Betätigungsverbindungselement (44) drehbar beweglich ist, wobei das distale Verbindungselement (46) ferner dafür konfiguriert ist, mit der Hochauftriebsfläche (22) verbunden zu werden und relativ zur Hochauftriebsfläche (22) drehbar beweglich zu sein.

6. Betätigungsmechanismus (24) nach Anspruch 5, wobei das Betätigungsverbindungselement (44) zwei nicht fluchtende Betätigungsarme (44A, 44B) umfasst.

7. Betätigungsmechanismus (24) nach Anspruch 6, wobei ein Winkel (α) zwischen den beiden nicht fluchtenden Betätigungsarmen (44A, 44B) zwischen 5° und 30° liegt.

8. Betätigungsmechanismus (24) nach einem der Ansprüche 5 bis 7, wobei das proximale Verbindungselement (42) kürzer ist als das distale Verbindungselement (46).

9. Betätigungsmechanismus (24) nach einem der vorhergehenden Ansprüche, wobei die Schwinge (28) einen Hauptkörper (34) und einen Verbindungsabschnitt (36) umfasst, wobei das Gehäuse (38) des Drehaktuators (30) am Hauptkörper (34) befestigt ist und der Verbindungsabschnitt (36) dafür konfiguriert ist, mit dem Flügelkörper (20) verbunden zu werden, damit die Schwinge (28) relativ zum Flügelkörper (20) drehbar beweglich ist.

10. Hochauftriebssystem (12), umfassend einen Flügelkörper (20), eine Hochauftriebsfläche (22) und einen Betätigungsmechanismus (24) nach einem der Ansprüche 1 bis 9, wobei das Führungsgestänge (26) des Betätigungsmechanismus (24) mit der Hochauftriebsfläche (22) verbunden ist, die Schwinge (28) des Betätigungsmechanismus (24) mit dem Flügelkörper (20) verbunden ist und das Betätigungsgestänge (32) des Betätigungsmechanismus (24) mit der Hochauftriebsfläche (22) und mit dem Flügelkörper (20) verbunden ist.

11. Hochauftriebssystem (12) nach Anspruch 10, wobei die Hochauftriebsfläche (22) eine Krügerklappe bildet.

12. Luftfahrzeug (10), umfassend ein Hochauftriebssystem (12) nach Anspruch 10 oder 11.

13. Verfahren zum Betätigen eines Hochauftriebssystems (12) nach Anspruch 10 oder 11, wobei das Verfahren Folgendes umfasst:
- Betätigung des Drehaktuators (30), um das Betätigungselement (40) relativ zum Gehäuse (38) des Drehaktuators (30) zu bewegen;
- Verschiebung der Hochauftriebsfläche (22) relativ zum Flügelkörper (20) durch das Betätigungsgestänge (32);
- Führung der Verschiebung der Hochauftriebsfläche (22) relativ zum Flügelkörper (20) durch das Führungsgestänge (26); und
- Drehung der Schwinge (28) relativ zum Flügelkörper (20).

14. Verfahren zum Betätigen eines Hochauftriebssystems (12) nach Anspruch 13, wobei das Hochauftriebssystem (12) zwischen einer eingefahrenen Position und einer ausgefahrenen Position betätigt wird, wobei die Betätigung zwischen der eingefahrenen und der ausgefahrenen Position Folgendes umfasst:
- eine erste Phase, in der sich die Schwinge (28) in einer ersten Richtung relativ zum Flügelkörper (20) dreht, und
- eine zweite Phase, in der sich die Schwinge (28) in einer zweiten Richtung relativ zum Flügelkörper (20) dreht, wobei die zweite Richtung der ersten Richtung entgegengesetzt ist.

15. Verfahren zum Betätigen eines Hochauftriebssystems (12) nach Anspruch 14, wobei die Schwinge (28) in einem durch den Flügelkörper (20) definierten Innenvolumen (V) angeordnet ist, wenn sich das Hochauftriebssystem (12) in seiner eingefahrenen Position und in seiner ausgefahrenen Position befindet.

## Revendications

1. Mécanisme d'actionnement (24) pour un système hypersustentateur (12), configuré pour déplacer une surface hypersustentatrice (22) par rapport à un corps de voilure (20), le mécanisme d'actionnement (24) comprenant:
- une tringlerie de guidage (26), configurée pour être connectée à la surface hypersustentatrice (22) et pour guider un déplacement de la surface hypersustentatrice (22) par rapport au corps de voilure (20) ;
- un balancier (28), configuré pour être connecté au corps de voilure (20) et pour être mobile en rotation par rapport au corps de voilure (20) ;
- un actionneur rotatif (30), comprenant un boîtier (38) et un élément d'actionnement (40), le boîtier (38) étant fixé au balancier (28) et l'élément d'actionnement (40) étant mobile en rotation par rapport au boîtier (38) ; et
- une tringlerie d'actionnement (32), connectée à l'élément d'actionnement (40) et configurée pour être connectée à la surface hypersustentatrice (22) et au corps de voilure (20), la tringlerie d'actionnement (32) étant configurée pour déplacer le balancier (28) et la surface hypersustentatrice (22) par rapport au corps de voilure (20) lors de la rotation de l'élément d'actionnement (40) par rapport au boîtier (38).

2. Mécanisme d'actionnement (24) selon la revendication 1, dans lequel la tringlerie de guidage (26) est configurée pour être connectée au corps de voilure (20) et pour guider le déplacement de la surface hypersustentatrice (22) en rotation par rapport au corps de voilure (20).

3. Mécanisme d'actionnement (24) selon la revendication 1, dans lequel la tringlerie de guidage (26) est connectée au balancier (28) et configurée pour guider le déplacement de la surface hypersustentatrice (22) en rotation par rapport au balancier (28).

4. Mécanisme d'actionnement (24) selon l'une quelconque des revendications précédentes, dans lequel la tringlerie de guidage (26) est configurée pour être fixée à la surface hypersustentatrice (22), la tringlerie de guidage (26) s'étendant sensiblement selon une forme en L.

5. Mécanisme d'actionnement (24) selon l'une quelconque des revendications précédentes, dans lequel la tringlerie d'actionnement (32) comprend un élément de liaison proximal (42), un élément de liaison d'actionnement (44) et un élément de liaison distal (46), l'élément de liaison d'actionnement (44) étant fixé à l'élément d'actionnement (40), l'élément de liaison proximal (42) étant connecté à l'élément de liaison d'actionnement (44) et étant mobile en rotation par rapport à l'élément de liaison d'actionnement (44), l'élément de liaison proximal (42) étant en outre configuré pour être connecté au corps de voilure (20) et pour être mobile en rotation par rapport au corps de voilure (20), l'élément de liaison distal (46) étant connecté à l'élément de liaison d'actionnement (44) et étant mobile en rotation par rapport à l'élément de liaison d'actionnement (44), l'élément de liaison distal (46) étant en outre configuré pour être connecté à la surface hypersustentatrice (22) et pour être mobile en rotation par rapport à la surface hypersustentatrice (22).

6. Mécanisme d'actionnement (24) selon la revendication 5, dans lequel l'élément de liaison d'actionnement (44) comprend deux bras d'actionnement non alignés (44A, 44B).

7. Mécanisme d'actionnement (24) selon la revendication 6, dans lequel un angle (α) entre les deux bras d'actionnement non alignés (44A, 44B) est compris entre 5° et 30°.

8. Mécanisme d'actionnement (24) selon l'une quelconque des revendications 5 à 7, dans lequel l'élément de liaison proximal (42) est plus court que l'élément de liaison distal (46).

9. Mécanisme d'actionnement (24) selon l'une quelconque des revendications précédentes, dans lequel le balancier (28) comprend un corps principal (34) et une section de connexion (36), le boîtier (38) de l'actionneur rotatif (30) étant fixé au corps principal (34) et la section de connexion (36) étant configurée pour être connectée au corps de voilure (20) pour que le balancier (28) soit mobile en rotation par rapport au corps de voilure (20).

10. Système hypersustentateur (12) comprenant un corps de voilure (20), une surface hypersustentatrice (22) et un mécanisme d'actionnement (24) selon l'une quelconque des revendications 1 à 9, la tringlerie de guidage (26) du mécanisme d'actionnement (24) étant connectée à la surface hypersustentatrice (22), le balancier (28) du mécanisme d'actionnement (24) étant connecté au corps de voilure (20) et la tringlerie d'actionnement (32) du mécanisme d'actionnement (24) étant connectée à la surface hypersustentatrice (22) et au corps de voilure (20).

11. Système hypersustentateur (12) selon la revendication 10, dans lequel la surface hypersustentatrice (22) forme un volet Krüger.

12. Aéronef (10) comprenant un système hypersustentateur (12) selon la revendication 10 ou 11.

13. Procédé d'actionnement d'un système hypersustentateur (12) selon la revendication 10 ou 11, dans lequel le procédé comprend:
- l'actionnement de l'actionneur rotatif (30) pour déplacer l'élément d'actionnement (40) par rapport au boîtier (38) de l'actionneur rotatif (30) ;
- le déplacement de la surface hypersustentatrice (22) par rapport au corps de voilure (20) par la tringlerie d'actionnement (32) ;
- le guidage du déplacement de la surface hypersustentatrice (22) par rapport au corps de voilure (20) par la tringlerie de guidage (26) ; et
- la rotation du balancier (28) par rapport au corps de voilure (20).

14. Procédé d'actionnement d'un système hypersustentateur (12) selon la revendication 13, dans lequel le système hypersustentateur (12) est actionné entre une position rétractée et une position déployée, l'actionnement entre la position rétractée et la position déployée comprenant :
- une première phase, dans laquelle le balancier (28) tourne dans une première direction par rapport au corps de voilure (20), et
- une seconde phase, dans laquelle le balancier (28) tourne dans une seconde direction par rapport au corps de voilure (20), la seconde direction étant opposée à la première direction.

15. Procédé d'actionnement d'un système hypersustentateur (12) selon la revendication 14, dans lequel le balancier (28) est agencé dans un volume intérieur (V) défini par le corps de voilure (20) lorsque le système hypersustentateur (12) est dans sa position rétractée et dans sa position déployée.
